# FASCICULE DE BREVET EUROPEEN

(11) **EP 1 619 924 B1**
(45) Date de publication et mention de la délivrance du brevet: **24.01.2007**
(21) Numéro de dépôt: 05291540.2
(22) Date de dépôt: 19.07.2005
(51) Int. Cl.: H04Q 11/04, G01R 31/02, H04M 3/30

(54) **Système de distribution de la téléphonie**
Telefon-Verteilsystem
Telephony distribution system

(30) Priorité: 19.07.2004 FR 0407973
(43) Date de publication de la demande: 25.01.2006
(73) Titulaire: LEGRAND FRANCE, 87000 Limoges (FR); LEGRAND SNC, 87000 Limoges (FR)
(72) Inventeur: Feugere, Pierre, 38160 Saint-Verand (FR)
(74) Mandataire: Lepelletier-Beaufond, François

(56) Documents cités:
- US-A- 4 551 671
- US-A- 4 748 652

## Description

L'invention a trait à la distribution de la téléphonie.

On sait qu'il est intéressant de pouvoir distribuer la téléphonie sur une paire de conducteurs torsadée disponible dans un câble servant par ailleurs à la distribution des signaux de réseau informatique local (en anglais : Local Area Network). Un tel système est divulgué dans le document US 4 551 671.

L'invention vise notamment à accroître la fiabilité d'une telle distribution.

Elle propose à cet effet un système de distribution de la téléphonie, comportant au moins une première borne à deux points de raccordement pour une paire de conducteurs fournissant une ligne téléphonique et plusieurs deuxièmes bornes à deux points de raccordement, chacune pour une paire de conducteurs faisant partie d'une installation de distribution de la téléphonie, avec chaque point de chaque dite deuxième borne qui est relié ou reliable à un point respectif de ladite première borne ; caractérisé en ce qu'il comporte, pour chaque dite deuxième borne, un gestionnaire de court-circuit comportant :
- une source de courant de substitution ;
- un organe d'inversion comportant une première borne d'entrée reliée ou reliable à ladite première borne, une deuxième borne d'entrée reliée à ladite source de courant de substitution, et une borne de sortie reliée à cette deuxième borne sans être reliée à une autre deuxième borne, ledit organe d'inversion admettant une première position où il relie la borne de sortie à la première borne d'entrée tandis qu'il isole l'une de l'autre la borne de sortie et la deuxième borne d'entrée, et admettant une deuxième position où il relie l'une à l'autre la borne de sortie et la deuxième borne d'entrée tandis qu'il isole l'une de l'autre la borne de sortie et la première borne d'entrée ; et
- des moyens de pilotage dudit organe d'inversion pour lui faire prendre normalement ladite première position et pour lui faire prendre ladite deuxième position en cas de court-circuit entre les deux points de cette deuxième borne.

Le court-circuit des points de raccordement de l'une des deuxièmes bornes peut par exemple être produit par un appareil de réseau informatique local car certains de ces appareils, qui utilisent sur les prises conventionnelles RJ 45 la paire de contact 1-2 et la paire de contact 3-6, court-circuitent la paire de contacts 4-5 généralement utilisée pour la téléphonie.

Du fait que la borne de sortie de chaque organe d'inversion n'est reliée à aucune autre deuxième borne que la deuxième borne concernée et du fait que dans la deuxième position de l'organe d'inversion la borne de sortie est isolée de la première borne d'entrée, le court-circuit ne se retrouvera ni sur la première borne ni sur les autres deuxièmes bornes qui resteront donc opérationnelles.

On voit que le système selon l'invention permet d'éviter qu'un court-circuit local se transforme en court-circuit général.

Du fait que dans la deuxième position de l'organe d'inversion les points de raccordement de la deuxième borne concernée sont reliés à la source de courant auxiliaire, les moyens de pilotage disposent, malgré l'isolement vis-à-vis de la paire de conducteurs fournissant une ligne téléphonique, d'une alimentation électrique leur permettant de savoir si le court-circuit persiste ou non entre les deux points de raccordement de la deuxième borne concernée.

La surveillance du court-circuit et le retour de l'organe d'inversion à la première position lorsque le court-circuit a disparu ne nécessitent donc pas d'effectuer périodiquement des essais de reconnexion aux conducteurs fournissant la ligne téléphonique.

Ainsi, le système selon l'invention n'introduit pas de perturbations périodiques sur le réseau téléphonique et offre un temps de réaction particulièrement rapide lorsque le court-circuit disparaît.

Dans un mode de réalisation préféré, lesdits moyens de pilotage sont adaptés à détecter si une première condition prédéterminée de courant et/ou de tension représentative d'une situation normale entre les deux points de la deuxième borne concernée est satisfaite ou non, adaptés à détecter si une deuxième condition prédéterminée de courant et/ou de tension représentative d'une situation de court-circuit entre les deux points de cette deuxième borne est satisfaite ou non, ladite deuxième condition étant distincte de l'inverse de ladite première condition, et adaptés à faire prendre audit organe d'inversion ladite première position lorsque ladite première condition est satisfaite, à faire prendre audit organe d'inversion ladite deuxième position lorsque ladite deuxième condition est satisfaite et sinon à faire rester ledit organe d'inversion dans ladite première position ou dans ladite deuxième position.

La détection, par les moyens de pilotage, d'une situation de court-circuit et d'une situation normale peut ainsi s'effectuer d'une façon particulièrement sûre.

Selon des caractéristiques préférées du mode de réalisation qui vient d'être exposé, pour des raisons de simplicité et de commodité, tant à l'utilisation qu'à la fabrication :
- ladite première condition est l'absence d'une consommation de courant à la deuxième borne concernée et ladite deuxième condition est la conjonction de la présence d'une consommation de courant et de la présence d'une sous-tension à la deuxième borne concernée ; et optionnellement
- lesdits moyens de pilotage comportent un organe de détection de sous-tension pour déterminer si la tension à la deuxième borne concernée est inférieure ou non à un seuil prédéterminé, un organe de détection de consommation de courant pour déterminer si le courant à la deuxième borne concernée est supérieur ou non à un seuil prédéterminé, un organe logique relié audit organe de détection de sous-tension et audit organe de détection de consommation de courant, et un organe de commande dudit organe d'inversion, ledit organe logique étant adapté à piloter ledit organe de commande pour faire prendre audit organe d'inversion ladite première position si ledit organe de détection de consommation de courant ne détermine pas qu'une intensité supérieure audit seuil de courant prédéterminé est consommée à la deuxième borne concernée, pour faire prendre audit organe d'inversion ladite deuxième position lorsque ledit organe de détection de sous-tension détermine que la tension à la deuxième borne concernée est inférieure audit seuil de tension prédéterminé et que ledit organe de détection de consommation de courant détermine en même temps que l'intensité consommée à ladite deuxième borne concernée est supérieure audit seuil de courant prédéterminé et pour faire rester ledit organe d'inversion dans ladite première position ou dans ladite deuxième position lorsque ledit organe de détection de sous-tension détermine que la tension à ladite deuxième borne concernée est supérieure audit seuil de tension prédéterminé et que ledit organe de détection de consommation de courant détermine que l'intensité à ladite deuxième borne concernée est supérieure audit seuil de courant prédéterminé ; et optionnellement
- ledit seuil d'intensité prédéterminé est compris entre 0,1 et 1,5 milliampères ; et/ou
- ledit seuil de tension prédéterminé est compris entre 2 et 10 volts.

Selon des caractéristiques préférées de la présente invention, pour des raisons de simplicité et de commodité, tant à l'utilisation qu'à la fabrication :
- lesdits moyens de pilotage comportent un organe de détection de sous-tension comportant un comparateur pour déterminer si la tension à ladite deuxième borne concernée est inférieure ou non à un seuil de tension prédéterminé ; et optionnellement
- ledit organe de détection de sous-tension comporte un pont de diodes à redressement double alternance dont les points de raccordement d'entrée sont reliés à des points de raccordement d'entrée dudit organe de détection de sous-tension ; et/ou
- lesdits moyens de pilotage comportent un organe de détection de sous-tension disposé en parallèle, par des points de raccordement d'entrée, de ladite première borne d'entrée dudit organe d'inversion ; et/ou
- lesdits moyens de pilotage comportent un organe de détection de consommation de courant comportant un optocoupleur pour détecter si l'intensité à ladite deuxième borne concernée est supérieure ou non à un seuil prédéterminé ; et optionnellement
- ledit optocoupleur est muni d'un ensemble de deux photodiodes disposées tête-bêche ; et/ou
- lesdits moyens de pilotage comportent un organe de détection de consommation de courant disposé, par deux points de raccordement d'entrée, en série entre l'un des points de raccordement de ladite borne de sortie de l'organe d'inversion et l'un des points de raccordement de la deuxième borne concernée ; et/ou
- lesdits moyens de pilotage comportent un organe logique présentant une bascule ; et/ou
- lesdits moyens de pilotage comportent un organe de commande présentant un solénoïde et une source de courant continu présentant un pôle de masse et un pôle positif avec chaque point de raccordement dudit solénoïde qui est relié à chaque pôle de ladite source de courant continu par l'intermédiaire d'un transistor dont une électrode de commande est reliée à un point de raccordement dudit organe de commande par l'intermédiaire d'une résistance de polarisation ou par l'intermédiaire d'un inverseur de signal logique et par l'intermédiaire d'une résistance de polarisation, de sorte que quand ledit point de raccordement est au même potentiel que ledit pôle de masse, un premier desdits transistors, disposé entre ledit pôle positif et un premier point de raccordement dudit solénoïde, est passant tandis qu'un deuxième desdits transistors, disposé entre un deuxième desdits points de raccordement du solénoïde et ledit pôle de masse, est passant alors que les deux autres transistors sont bloqués, et de sorte que quand ledit point de raccordement de l'organe de commande est au même potentiel que ledit pôle positif, un troisième desdits transistors, situé entre ledit pôle positif et ledit deuxième point de raccordement dudit solénoïde, est passant tandis que le quatrième transistor, disposé entre le premier point de raccordement dudit solénoïde et ledit pôle de masse, est passant alors que le premier transistor et le deuxième transistor sont bloqués ; et/ou
- ladite source de courant auxiliaire présente deux pôles d'alimentation et une résistance de limitation de courant disposée entre l'un desdits pôles d'alimentation et l'un des points de raccordement de ladite deuxième borne d'entrée ; et/ou
- ledit système comporte deux dites premières bornes de connexion et il comporte pour chaque dite deuxième borne un organe d'inversion présentant une première borne d'entrée reliée à l'une desdites premières bornes, une deuxième borne d'entrée reliée à l'autre desdites premières bornes et une borne de sortie reliée à ladite deuxième borne concernée par l'intermédiaire dudit gestionnaire de court-circuit, avec ledit organe d'inversion qui admet une première position où il relie la borne de sortie à la première borne d'entrée tandis qu'il isole l'une de l'autre la borne de sortie et la deuxième borne d'entrée, et qui admet une deuxième position où il relie l'une à l'autre la borne de sortie et la deuxième borne d'entrée tandis qu'il isole l'une de l'autre la borne de sortie et la première borne d'entrée.

On notera que le système selon l'invention est particulièrement intéressant dans la configuration qui vient d'être exposée (installation mixte de réseau informatique local et de distribution de la téléphonie) mais que son utilisation est également intéressante lorsque les paires de conducteurs servant à véhiculer la téléphonie font partie d'une installation indépendante.

L'exposé de l'invention sera maintenant poursuivi par la description d'un exemple de réalisation, donnée ci-après à titre illustratif et non limitatif, en référence aux dessins annexés. Sur ceux-ci :
- la figure 1 est une vue schématique d'une installation de distribution de la téléphonie comportant un système conforme à l'invention ;
- la figure 2 est un schéma indiquant la nature des signaux présents sur chacune des quatre paires de contacts des prises que comporte cette installation ;
- la figure 3 est une représentation schématique partielle du système de distribution conforme à l'invention ; et
- les figures 4 à 6 sont des représentations plus détaillées des organes qui forment les moyens de pilotage que comporte chaque gestionnaire de court-circuit du système conforme à l'invention, respectivement l'organe de détection de sous-tension (figure 4), l'organe de détection de consommation de courant (figure 5) et l'ensemble formé par l'organe logique et par l'organe de commande (figure 6).

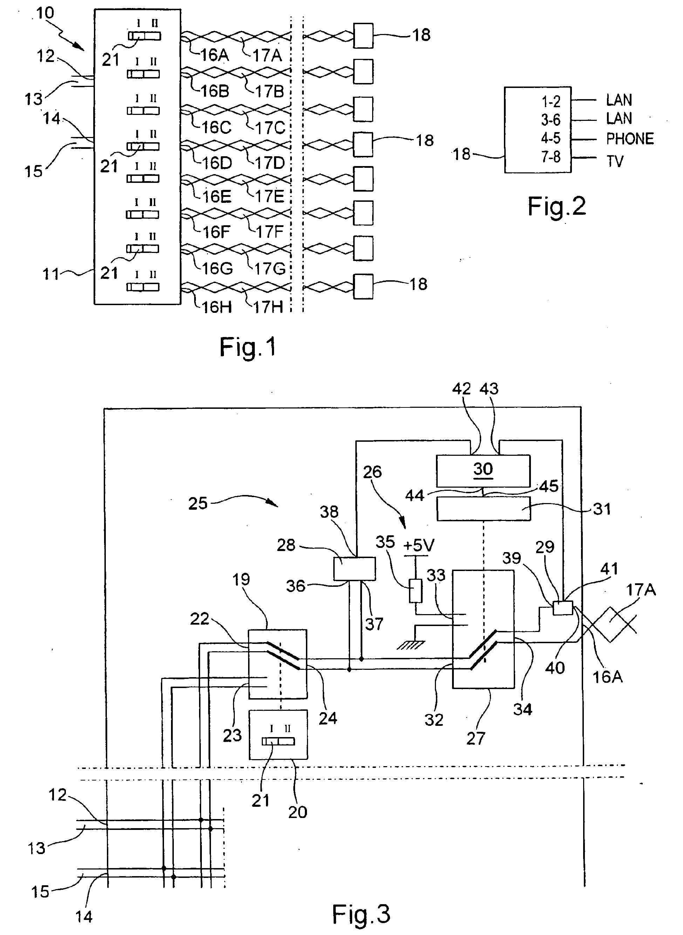

L'installation 10 illustrée schématiquement sur la figure 1 comporte un système 11 muni d'une borne de raccordement 12 à laquelle aboutit une paire de conducteurs 13 d'un câble téléphonique, muni d'une borne de raccordement 14 à laquelle aboutit une autre paire 15 de conducteurs d'un câble téléphonique, et muni de huit bornes de raccordement 16A à 16H à chacune desquelles aboutit une respective de huit paires de conducteurs torsadées 17A à 17H, lesquelles sont raccordées chacune, à l'extrémité opposée au système 11, à une prise 18.

Bien entendu, chacune des bornes 12, 14 et 16A à 16H présente deux points de raccordement, chacun pour un conducteur respectif de la paire y aboutissant.

Le système 11 est ici disposé dans une gaine technique du bâtiment résidentiel ou tertiaire auquel appartient l'installation 10.

Les paires téléphoniques 13 et 15 sont reliées au réseau téléphonique commuté public, et plus précisément à un central de l'opérateur de téléphonie, lequel fournit une ligne sur chacune des paires 13 et 15.

Les paires de conducteurs torsadées 17A à 17H font ici chacune partie d'un câble conventionnel de réseau informatique local. Chacun de ces câbles comporte, en outre de l'une des paires 17A à 17H, trois autres paires de conducteurs torsadées véhiculant des signaux d'une autre nature.

Chacune des prises 18 est ici du type RJ 45, en catégorie 6.

La figure 2 montre le câblage des prises 18.

On voit que la paire de contacts 1 et 2 est prévue pour les signaux de réseau informatique local LAN, qu'il en va de même pour la paire de contacts 3 et 6, que c'est la paire de contacts 4 et 5 qui est prévue pour les signaux de téléphonie PHONE véhiculés par l'une des paires 17A à 17H, et que la paire de contacts 7 et 8 est prévue pour les signaux de télévision TV.

On va maintenant décrire à l'appui de la figure 3 le circuit existant entre les bornes 12, 14 et 16A, étant entendu que la description qui suit pour la borne 16A vaut également pour chacune des bornes 16B à 16H.

Le système 11 comporte pour la borne 16A un organe d'inversion 19 et un organe de commande 20 de l'organe d'inversion 19.

L'organe 20 comporte un curseur 21 à deux positions repérées respectivement par I et II.

L'organe d'inversion 19 présente une borne d'entrée 22 reliée à la borne 12, une borne d'entrée 23 reliée à la borne 14 et une borne de sortie 24 reliée à la borne 16A par l'intermédiaire d'un gestionnaire de court-circuit 25.

Bien entendu, chacune des bornes 22, 23 et 24 présente deux points de raccordement et il existe entre chaque couple de bornes reliées l'une à l'autre, deux liaisons allant chacune de l'un des points de raccordement d'une borne à un point de raccordement correspondant de l'autre borne du couple.

Lorsque le curseur 21 est dans la position I, ainsi qu'illustré sur la figure 3, la borne 24 de l'organe d'inversion 19 est isolée de la borne 23 et reliée à la borne 22, et donc à la borne 12.

Lorsque le curseur 21 est dans la position II, c'est à la borne 23 et donc à la borne 14, qu'est reliée la borne 24, laquelle est isolée de la borne 22.

On voit que le système 11 permet, grâce à l'organe d'inversion 19 et à son organe de commande 20, de relier la borne 16A sélectivement à la borne 12 ou à la borne 14, c'est-à-dire de relier sélectivement la paire torsadée 17A à la paire téléphonique 13 ou à la paire téléphonique 15.

Le gestionnaire de court-circuit 25 comporte une source de courant auxiliaire 26, un organe d'inversion 27 et des moyens de pilotage de l'organe 27 formés par un organe 28 de détection de sous-tension, par un organe 29 de détection de consommation de courant, par un organe logique 30 et par un organe de commande 31.

L'organe d'inversion 27 présente deux bornes d'entrée respectives 32 et 33 et une borne de sortie 34.

Bien entendu, chacune des bornes 32, 33 et 34 présente deux points de raccordement et il existe entre chaque couple de bornes reliées l'une à l'autre, deux liaisons allant chacune de l'un des points de raccordement d'une borne à un point de raccordement correspondant de l'autre borne du couple.

La borne 32 est directement reliée par une paire de conducteurs à la borne de sortie 24 de l'organe d'inversion 19.

La borne 33 est directement reliée par une paire de conducteurs à la source de courant auxiliaire 26, laquelle comporte une résistance 35 de limitation de courant.

Ici, la source de courant auxiliaire 26 présente un pôle de masse (potentiel de référence) directement relié à l'un des points de raccordement de la borne 33 et un pôle positif, ici porté à un potentiel de + cinq volts par rapport au potentiel de référence, relié à l'autre point de raccordement de la borne 33 par l'intermédiaire de la résistance 35.

Lorsque l'organe 27 est dans la position illustrée sur la figure 3, qui est la position normale de fonctionnement, les bornes 32 et 34 sont reliées l'une à l'autre tandis que les bornes 33 et 34 sont isolées l'une de l'autre, de sorte que la borne 16A est reliée à la borne 24 et est isolée de la source de courant auxiliaire 26.

Dans l'autre position de l'organe d'inversion 27, les bornes 32 et 34 sont isolées l'une de l'autre tandis que les bornes 33 et 34 sont reliées l'une à l'autre, de sorte que la borne 16A est isolée de la borne 24 et est reliée à la source de courant auxiliaire 26.

L'organe de détection de sous-tension 28 présente trois points de raccordement respectifs 36, 37 et 38.

D'une façon générale, l'organe 28 est disposé, par ses points de raccordement 36 et 37, en parallèle des bornes 32 et 24.

Plus précisément, les points 36 et 37 sont chacun reliés à un point de raccordement respectif de la borne de 32 de l'organe d'inversion 27, et, vu la liaison directe existant entre les bornes 24 et 32, à un point de raccordement respectif de la borne 24 de l'organe d'inversion 19.

Les points de raccordement 36 et 37 permettent à l'organe 28 de connaître la tension présente entre les points de raccordement de la borne 24, soit la tension fournie par la ligne 13 ou par la ligne 15. En situation normale (organe d'inversion 27 dans la position illustrée sur la figure 3) cette tension est aussi celle qui est présente entre les points de raccordement de la borne 16A.

Le point de raccordement 38 fournit un signal logique à deux états, dont l'un est pris lorsque la différence de potentiel entre les points 36 et 37 est inférieure à un seuil prédéterminé, ici de trois volts, et dont l'autre état est pris lorsque la tension entre les points 36 et 37 est supérieure à ce seuil.

L'organe de détection de consommation de courant 29 présente trois points de raccordement respectifs 39, 40 et 41.

D'une façon générale, l'organe 29 est disposé, par ses points de raccordement 39 et 40, en série sur l'une des liaisons entre les bornes 34 et 16A, le point 39 étant ici relié à l'un des points de raccordement de la borne 34 et le point40 à l'un des points de raccordement de la borne 16A.

Le point de raccordement 41 fournit un signal logique à deux états, dont l'un est pris lorsque le courant circulant entre les points de raccordement 39 et 40 est inférieur à un seuil prédéterminé, ici de un milliampère, et dont l'autre est pris lorsque le courant circulant entre les points de raccordement 39 et 40 est supérieur à ce seuil.

L'organe logique 30 présente trois points de raccordement respectifs 42, 43 et 44.

Les points 42 et 43 sont reliés respectivement au point 38 et au point 41, de sorte que par les points 42 et 43 l'organe logique 30 reçoit les signaux logiques émis par les organes 28 et 29.

Le point de raccordement 44 fournit un signal logique à deux états, dont l'un correspond à la position de l'organe d'inversion 27 illustrée sur la figure 3 (situation normale) et dont l'autre état correspond à la position de l'organe 27 autre que celle illustrée sur la figure 3 (situation de court-circuit).

Le circuit interne de l'organe 30 est tel que :
- lorsque le signal émis par l'organe 29 est dans l'état qu'il prend lorsque le courant circulant entre les points 39 et 40 est inférieur au seuil de courant prédéterminé (absence de consommation de courant), le signal présent au point de raccordement 44 est dans l'état correspondant à la position de l'organe 27 illustrée sur la figure 3 (situation normale) quel que soit l'état du signal émis par l'organe 28 ; et
- lorsque le signal émis par l'organe 29 est dans l'état qu'il prend lorsque le seuil de courant prédéterminé est dépassé (présence d'une consommation de courant), le signal présent au point 44 prend l'état correspondant à la position de l'organe 27 autre que celle illustrée sur la figure 3 (situation de court-circuit) si le signal logique émis par le détecteur 28 est dans l'état qu'il prend lorsque la tension est inférieure au seuil prédéterminé (présence d'une sous-tension) et sinon (absence de sous-tension), le signal présent au point de raccordement 44 reste à l'état en cours (situation normale ou situation de court-circuit).

L'organe de commande 31 présente un point de raccordement 45 directement relié au point de raccordement 44 de l'organe 30. II fait prendre à l'organe 27 la position illustrée sur la figure 3 ou l'autre position en fonction de l'état du signal présent au point de raccordement 44 de l'organe 30.

Dans la configuration illustrée sur la figure 3, en l'absence de liaison externe entre les deux points de raccordement de la borne 16A (pas d'appareil raccordé à la prise 18 ou appareil à l'état de repos), le signal logique émis par l'organe 28 est à l'état correspondant à l'absence de sous-tension et le signal logique émis par l'organe 29 est à l'état correspondant à l'absence de consommation de courant, de sorte que le signal logique émis par l'organe 30 correspond à une situation normale. L'organe 27 relie alors les bornes 32 et 34 alors qu'il isole les bornes 33 et 34.

Si, à partir de cette situation, il existe une consommation externe de courant sans court-circuit, le signal logique émis par l'organe 29 change d'état mais le signal logique émis par l'organe 28 ne change pas d'état et donc le signal logique émis par l'organe 30 ne change pas d'état.

En revanche, si un court-circuit se produit entre les points de raccordement de la borne 16A, ce sont à la fois le signal logique émis par l'organe 28 et le signal logique émis par l'organe 29 qui prennent l'état correspondant à la présence du critère surveillé, le signal logique émis par l'organe 30 change donc d'état de sorte que l'organe de commande 31 fait prendre à l'organe d'inversion 27 la position autre que celle illustrée sur la figure 3.

Dans cette autre position, la borne 16A est raccordée à la source de courant auxiliaire 26 sans être raccordée à l'une des lignes téléphoniques 13 ou 15.

Du fait de ce changement de position de l'organe 27, le signal émis par l'organe 28 repasse à l'état correspondant à l'absence de sous-tension tandis que le signal émis par l'organe 29 reste à l'état correspondant à la présence d'une consommation de courant, de sorte que le signal émis par l'organe logique 30 reste à l'état correspondant à une situation de court-circuit.

Lorsque cesse le court-circuit entre les points de raccordement de la borne 16A, le courant circulant entre les points de raccordement 39 et 40 de l'organe 29 s'annule ou en tout cas passe en dessous du seuil prédéterminé, le signal émis par l'organe 29 change donc d'état, et en conséquence le signal logique émis par l'organe 30 change d'état, c'est-à-dire qu'il passe à l'état correspondant à une situation normale, de sorte que l'organe de commande 31 fait prendre à l'organe 27 la position illustrée sur la figure 3.

Le court-circuit entre les points de raccordement de la borne 16A peut par exemple être produit par un appareil de réseau informatique local. Il se trouve en effet que certains de ces appareils, qui utilisent sur les prises RJ 45 la paire de contacts 1-2 et la paire de contacts 3-6, court-circuitent la paire de contacts 4 et 5.

On voit que s'il existe un court-circuit entre les points de raccordement de la borne 16A, le passage de l'organe 27 à la position autre que celle illustrée sur la figure 3 a pour effet que ce court-circuit ne se retrouve pas en aval de l'inverseur 19.

Plus précisément, si le curseur 21 est dans la position I, le court-circuit ne remonte ni sur la borne 12 ni sur aucune des autres bornes de connexion à une paire torsadée pour laquelle le curseur 21 est sur la position I. Bien entendu, si le curseur 21 est sur la position II, le court-circuit ne remonte pas sur la borne 14 ni sur les autres bornes de raccordement à une paire torsadée pour lesquelles le curseur 21 est sur la position II.

Dans la position de l'organe d'inversion 27 autre que celle illustrée sur la figure 3, la source de courant auxiliaire 26 permet aux moyens de pilotage de cet organe, ici à l'organe de détection 29, de disposer, malgré l'isolement vis-à-vis de la paire de conducteurs 13 ou 15 fournissant une ligne téléphonique, d'une alimentation électrique permettant de savoir si le court-circuit persiste ou non entre les deux points de raccordement de la borne 16A.

Le seuil susmentionné d'un milliampère, vu la différence de potentiel entre les pôles de la source 26 (seulement cinq volts en courant continu alors que la différence de potentiel nominale sur une ligne téléphonique est de quarante-huit volts en courant continu) et vu la présence de la résistance de limitation de courant 35, n'est pas atteint avec un appareil de téléphonie conventionnel en configuration de consommation de courant, par exemple un téléphone décroché, et ceci d'autant plus que la paire de conducteurs torsadée 17A est longue, la valeur de résistance de cette paire s'ajoutant à celle de la résistance de limitation de courant 35.

On observera que la détection de la survenance d'un court-circuit et le retour de l'organe d'inversion 27 à la position initiale (position illustrée sur la figure 3) lorsque le court-circuit à disparu ne nécessite pas d'effectuer périodiquement des essais de passage à la position illustrée sur la figure 3, le gestionnaire de court-circuit 25 offrant ainsi l'avantage d'éviter d'introduire des perturbations périodiques sur le réseau téléphonique et d'offrir un temps de réaction particulièrement rapide lorsque le court-circuit disparaît.

On observera également que le fait d'effectuer la détection de la survenance d'un court-circuit et ensuite d'un retour à une situation normale avec les deux organes de détection 28 et 29, qui surveillent des critères distincts, permet d'effectuer cette détection de façon beaucoup plus sûre que si un seul critère était utilisé.

Si la détection de la survenance d'un court-circuit était effectuée avec un seul critère, par exemple l'absence ou la présence d'une surintensité de courant, il serait extrêmement difficile, voire pas possible, de déterminer un seuil de discrimination unique convenant à l'ensemble des circuits rencontrés dans la pratique, en raison de variations individuelles très importantes et notamment dans la tension réellement fournie par la ligne de l'opérateur téléphonique et par la résistance des conducteurs de l'installation téléphonique, en l'occurrence de la paire 17A pour la borne 16A. Au contraire, la prise en compte de deux critères distincts, ici un critère de tension (organe 28) et un critère de courant (organe 29), permet d'effectuer la détection en gardant les mêmes seuils pour une très grande variété de situations pratiques, ce qui permet donc de fixer définitivement à la fabrication les seuils de discrimination mis en oeuvre par les organes de détection.

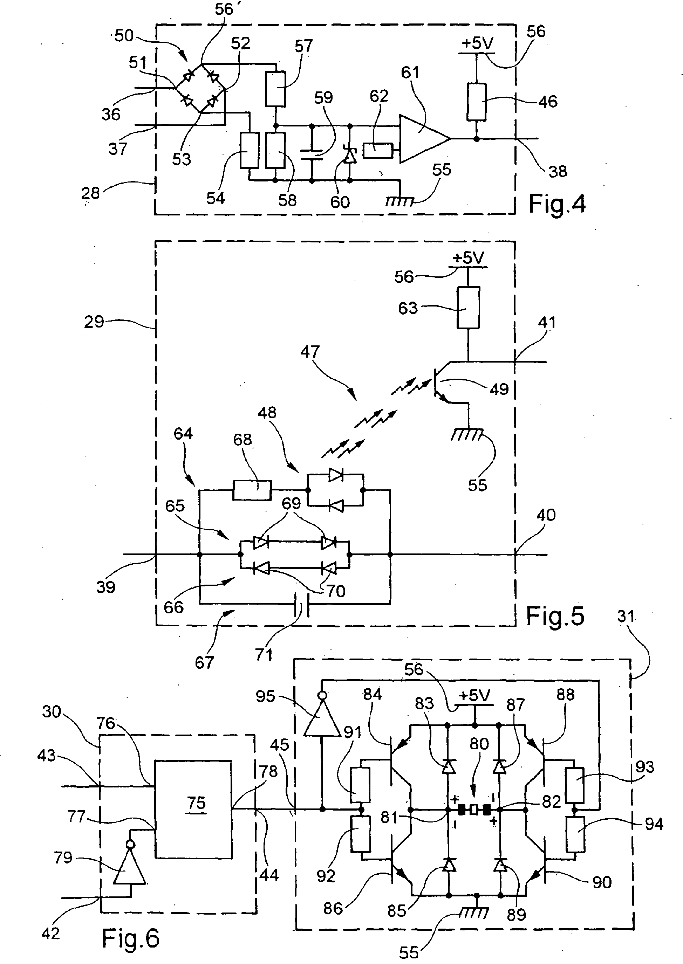

On va maintenant décrire de façon plus détaillée, à l'appui des figures 4 à 6, les organes 28 à 31 qui forment les moyens de pilotage de l'organe d'inversion 27.

D'une façon générale, les organes 28 et 29 sont prévus pour pouvoir fonctionner quelle que soit la polarité présente sur la paire de conducteurs 13 ou 15, c'est-à-dire que le potentiel au point de raccordement 36 peut aussi bien être plus élevé ou plus faible que le potentiel du point de raccordement 37, tandis que le courant peut aussi bien circuler du point de raccordement 39 vers le point de raccordement 40 que dans le sens inverse.

L'organe de détection de sous-tension 28 comporte un ensemble 50 de quatre diodes disposées en pont redresseur à double alternance dont les points d'entrée 51 et 52 sont reliés respectivement au point 36 et au point 37.

Le point de raccordement 53 de l'ensemble 50 correspondant au pôle négatif est relié à l'un des points de raccordement d'une résistance 54 de limitation de courant dont l'autre point de raccordement est relié au pôle de masse 55 d'une source de courant continu à laquelle est connecté l'organe 28.

Le pôle positif 56' de l'ensemble redresseur 50 est relié à l'un des points de raccordement d'une résistance 57. L'autre point de raccordement de la résistance 57 est relié à l'un des points de raccordement d'une résistance 58 dont l'autre point de raccordement est relié au pôle de masse 55.

Les points de raccordement des résistances 57 et 58 reliés l'un à l'autre sont également reliés à un point de raccordement d'un condensateur 59, à un point de raccordement d'une diode Zener 60 et à un point de raccordement d'entrée d'un comparateur 61. L'autre point de raccordement du condensateur 59 et l'autre point de raccordement de la diode 60 sont chacun reliés au pôle de masse 55.

L'autre point de raccordement d'entrée du comparateur 61 est relié à une référence de tension 62.

Le point de raccordement de sortie du comparateur 61 est relié au pôle positif 56 de la source de courant continu dont fait partie le pôle de masse 55, par l'intermédiaire d'une résistance de couplage 46, le point de raccordement de sortie du comparateur 61 étant également relié au point de connexion 38 de l'organe 28.

On voit que les résistances 57 et 58 constituent un pont diviseur permettant de diminuer la tension appliquée en entrée au comparateur 61, que le condensateur 59 lisse cette tension si besoin, que la diode Zener 60 écrête cette dernière, et que la résistance 54 permet, avec les résistances 57 et 58, de limiter le courant circulant entre les points de raccordement 36 et 37.

La référence de tension 62 ainsi que les valeurs choisies pour les résistances 54, 57 et 58, le condensateur 59 et la diode Zener 60 permettent de fixer le seuil à partir duquel le comparateur 61 passe d'un état où son point de sortie est au potentiel du pôle 55 à un état où son point de sortie est au potentiel du pôle 56.

Comme indiqué ci-dessus, ce seuil correspond ici à une tension de trois volts entre les points de raccordement 36 et 37.

En deçà de ce seuil, le point 38 est au même potentiel que le pôle 55 (état logique 0).

Lorsque la tension entre les points de raccordement 36 et 37 est supérieure au seuil prédéterminé, le point de raccordement 38 est au contraire au même potentiel que le pôle de masse 56 (état logique 1).

Ainsi, lorsque le point de raccordement 38 est à l'état logique 0, c'est que l'organe 28 détecte qu'il y a présence de sous-tension alors que quand il est à l'état logique 1, c'est que l'organe 28 détecte une absence de sous-tension.

L'organe 29 de détection de consommation de courant comporte un optocoupleur 47 comportant un ensemble 48 de deux photodiodes disposées tête-bêche en parallèle et un phototransistor 49 dont l'émetteur est relié au pôle de masse 55 de la même source de courant continu que l'organe 28 tandis que le collecteur de ce phototransistor est relié au pôle positif 56 de cette source par l'intermédiaire d'une résistance de couplage 63.

Ainsi, lorsqu'un courant circule entre les points de raccordement 39 et 40 avec une intensité supérieure au seuil de déclenchement de l'une ou l'autre des diodes 48, le phototransistor 49 est à l'état passant et le point de raccordement 41 est au même potentiel que le pôle 55 tandis qu'en dessous de ce seuil le phototransistor 49 est à l'état bloqué de sorte que le point de raccordement 41 est au même potentiel que le pôle 56.

Ainsi, lorsque le point de raccordement 41 est au même potentiel que le pôle 55 (état logique 0), cela correspond à la détection par l'organe 29 d'une consommation de courant et lorsque le point de raccordement 41 est au même potentiel que le pôle 56 (état logique 1), cela correspond à l'absence de détection par l'organe 29 d'une consommation de courant.

Entre les points de raccordement 39 et 40, l'organe 29 présente un circuit à quatre branches 64, 65, 66 et 67 disposées en parallèle.

L'ensemble de deux photodiodes 48 fait partie de la branche 64, qui comporte également une résistance 68 de limitation de courant disposée en série avec l'ensemble 48.

La branche 65 comporte deux diodes 69 disposées en série, montées dans le sens où elles laissent passer le courant du point de raccordement 39 vers le point de raccordement 40 et où elles le bloquent en sens inverse.

La branche 66 comporte deux diodes 70, identiques aux diodes 69, disposées en série, montées dans le sens où elles laissent passer le courant du point de raccordement 40 vers le point de raccordement 39 et où elle le bloquent en sens inverse.

Suivant le sens de circulation du courant, l'une des deux branches 65 et 66 introduit une légère chute de tension entre les bornes 39 et 40 qui permet l'activation de l'une des deux photodiodes de l'ensemble 48.

La chute de tension créée par les diodes 69 ou par les diodes 70, la valeur de la résistance 68 et les caractéristiques des photodiodes de l'ensemble 48 sont telles qu'une intensité d'un milliampère entre les points de raccordement 39 et 40 suffit à activer l'une des photodiodes de l'ensemble 48.

Enfin, la branche 67 présente un condensateur 71 dont la capacité est telle qu'il permet un passage direct entre les points de raccordement 39 et 40 des signaux ADSL (plage de fréquences de 25,8 à 1104 kHz).

L'organe logique 30 comporte une bascule 75 présentant deux points de raccordement d'entrée respectifs 76 et 77 et un point de raccordement de sortie 78.

La bascule 75 est telle que :
- lorsque l'état logique 1 (potentiel du pôle positif 56) est présent sur chacun des points de raccordement 76 et 77, le point de raccordement 78 est à l'état logique 1 ;
- lorsque l'état logique 1 est présent sur le point de raccordement 76 et que l'état logique 0 (potentiel du pôle de masse 55) est présent sur le point de raccordement 77, le point de raccordement 78 est à l'état 1 ;
- lorsque l'état logique 0 est présent sur le point de raccordement 76 et que l'état logique 1 est présent sur le point de raccordement 77, le point de raccordement 78 est à l'état 0 ; et
- lorsque l'état logique 0 est présent sur chacun des points de raccordement 76 et 77 le point de raccordement 78 reste à l'état logique 0 ou 1 (il ne change pas d'état).

Le point d'entrée 76 est directement relié au point de raccordement 43.

Le point d'entrée 77 est relié au point de raccordement 42 par l'intermédiaire d'un inverseur de signal logique 79.

Ainsi, le signal présent au point de raccordement 44 de l'organe logique 30 est :
- à l'état logique 1 lorsque le signal présent au point de raccordement 43 est à l'état logique 1 (absence de consommation de courant détectée par l'organe 29), quel que soit le signal présent au point de raccordement 42 ;
- à l'état logique 0 lorsque le signal présent au point de raccordement 43 est à l'état logique 0 (présence de consommation de courant détectée par l'organe 29) et que le signal présent au point de raccordement 42 est à l'état 0 (présence d'une sous-tension détectée par l'organe 28) ; et
- reste à l'état 0 ou l'état 1 (pas de changement d'état) lorsque le signal logique à chacun des points de raccordement 43 et 42 est à l'état 0 (présence d'une consommation de courant et absence de sous-tension).

Lorsque le signal logique présent au point de raccordement 44 (et donc au point 45) est à l'état 1, l'organe 27 est dans la position illustrée sur la figure 3 et vice-versa.

L'organe 31 de commande de l'organe d'inversion 27 comporte un solénoïde 80 disposé entre deux points de raccordement 81 et 82 prévus pour que le point de raccordement 81 soit connecté au pôle 56 et le point de raccordement 82 au pôle 55 lorsque le signal logique présent au point de raccordement 45 est à l'état 0 et pour que ce soit l'inverse lorsque le signal logique est à l'état 1.

Entre le point de raccordement 81 et le pôle 56, sont disposés en parallèle une diode de protection 83, orientée dans le sens où elle laisse passer le courant du point de raccordement 81 vers le pôle 56 tandis qu'elle bloque le courant en sens inverse, et un transistor PNP 84 dont l'émetteur est relié au pôle 56 et le collecteur au point 81.

Entre le point de raccordement 81 et le pôle 55, sont disposés en parallèle une diode de protection 85, orientée dans le sens où elle laisse passer le courant du pôle 55 vers le point 81 tandis qu'elle bloque le courant en sens inverse, et un transistor NPN 86 dont le collecteur est relié au point de raccordement 81 et l'émetteur au pôle 55.

Entre le point de raccordement 82 et le pôle 56, sont disposés en parallèle une diode de protection 87, orientée dans le sens où elle laisse passer le courant du point 82 vers le pôle 56 tandis qu'elle le bloque en sens inverse, et un transistor PNP 88 dont le collecteur est relié au point 82 et l'émetteur au pôle 56.

Entre le point de raccordement 82 et le pôle 55, sont disposés en parallèle une diode de protection 89, orientée dans le sens où elle laisser passer le courant du pôle 55 vers le point 82 tandis qu'elle bloque le courant en sens inverse, et un transistor NPN 90 dont le collecteur est relié au point 82 et l'émetteur au pôle 55.

Une résistance de polarisation 91 est disposée entre le point de raccordement 45 et la base du transistor 84.

Une résistance de polarisation 92 est disposée entre le point de raccordement 45 et la base du transistor 86.

Une résistance de polarisation 93 présente l'un de ses points de raccordement qui est raccordé à la base du transistor 88 tandis qu'une résistance de polarisation 94 présente l'un de ses points de raccordement qui est relié à la base du transistor 90, les résistances 93 et 94 étant reliées l'une à l'autre par leur point de raccordement restant, lesquels sont également reliés au point de raccordement 45 par l'intermédiaire d'un inverseur de signal logique 95.

On voit que quand le signal logique présent au point de raccordement 45 est à l'état 0 (potentiel du pôle 55), les transistors 84 et 90 sont à l'état passant tandis que les transistors 86 et 88 sont bloqués, alors que quand le signal logique est à l'état 1 (potentiel de pôle 56), les transistors 86 et 88 sont à l'état passant tandis que les transistors 84 et 90 sont à l'état bloqué.

Ainsi, comme indiqué ci-dessus, à l'état 0 le point de raccordement 81 est au potentiel du pôle 56 et le point de raccordement 82 est au potentiel du pôle 55 avec le solénoïde 80 qui fait prendre à l'organe 27 la position autre que celle illustrée sur la figure 3, et à l'état 1 c'est l'inverse.

Il va de soi que le système 11, s'il constitue un ensemble fonctionnel, ne constitue pas nécessairement un élément matériel monobloc.

A ce jour, dans un mode de réalisation préféré, les organes d'inversion 19 et leurs organes de commande 20 ainsi que les gestionnaires de court-circuit 25 sont réunis dans une unité électronique active tandis que les bornes 12, 14 et 16A à 16H font partie d'un concentrateur de câblage muni d'un connecteur pour recevoir cette unité électronique active.

Dans des variantes non illustrées, les paires téléphoniques 13 et 15 sont reliées à un réseau téléphonique privé plutôt que public et/ou à un réseau téléphonique numérique plutôt que commuté ; le système de distribution de la téléphonie tel que 11 est remplacé par un système connecté à une seule paire téléphonique, auquel cas les gestionnaires 25 sont chacun connectés directement à cette paire (il n'y a pas d'organe d'inversion 19 et chaque borne d'entrée telle que 32 est directement reliée à la borne unique telle que 12 ou 14) ; et/ou il est prévu plusieurs bornes de connexion pour une paire téléphonique telle que les paires torsadées 16A à 16H, mais en nombre inférieur ou supérieur à huit.

Dans d'autres variantes non illustrées, la source de courant auxiliaire présente des caractéristiques différentes, par exemple la différence de potentiel est inférieure à 5 V ou alors est plus élevée ; l'organe de détection de sous-tension 28, pour ce qui concerne ses points de raccordement 36 et 37, est en aval de l'organe d'inversion 27 plutôt qu'en amont ; les seuils de discrimination fixés pour l'organe de détection de sous-tension 28 et pour l'organe de détection de consommation de courant 29 sont différents, par exemple compris entre 2 et 10 volts et compris entre 0,1 et 1,5 milliampères ; les composants principaux employés par les organes de détection sont différents d'un comparateur tel que le comparateur 61 et d'un optocoupleur tel que l'optocoupleur 47, par exemple, pour l'organe de détection de sous-tension, un capteur à effet Hall pour détecter le champ magnétique dépendant de la tension existant entre les deux conducteurs de la paire fournissant une ligne téléphonique ; et/ou la constitution de l'organe logique tel que 30 et de l'organe de commande tel que 31 est différente, par exemple elle est faite avec des composants autres qu'en logique TTL.

Dans d'autres variantes non illustrées, l'organe d'inversion 27 prend aussi la position illustrée sur la figure 3 lorsqu'une première condition est satisfaite, prend la position autre que celle illustrée sur la figure 3 lorsqu'une deuxième condition est satisfaite et sinon reste dans la position en cours, avec la deuxième condition qui est distincte de l'inverse de la première condition, mais la première condition est distincte de l'absence de consommation de courant et/ou la deuxième condition est distincte de la conjonction de la présence d'une consommation de courant et de la présence d'une sous-tension. Par exemple, la première condition est la conjonction de l'absence de consommation de courant et de l'absence de sous-tension tandis que la deuxième condition est la conjonction de la présence de consommation de courant et de la présence d'une sous-tension.

Dans d'autres variantes non illustrées, une seule condition est prévue avec l'organe d'inversion tel que 27 qui prend la position illustrée sur la figure 3 lorsque cette condition est satisfaite et l'autre position lorsque cette condition n'est pas satisfaite, cette condition étant par exemple l'absence de surintensité dans la ligne téléphonique ; ou alors davantage que deux conditions sont mises en oeuvre, par exemple une condition de courant, une condition de tension et une condition dynamique de variation de courant, par exemple la présence d'un front montant de courant relativement raide.

De nombreuses autres variantes seront possibles en fonction des circonstances, et on rappelle à cet égard que l'invention ne se limite pas aux exemples décrits et représentés.

## Revendications

1. Système de distribution de la téléphonie, comportant au moins une première borne (12 ; 14) à deux points de raccordement pour une paire de conducteurs (13 ; 15) fournissant une ligne téléphonique et plusieurs deuxièmes bornes à deux points de raccordement (16A-16H), chacune pour une paire de conducteurs (17A-17H) faisant partie d'une installation de distribution de la téléphonie, avec chaque point de chaque dite deuxième borne (16A-16H) qui est relié ou reliable à un point respectif de ladite première borne (12 ; 14) ; **caractérisé en ce qu'**il comporte, pour chaque dite deuxième borne (16A-16H), un gestionnaire de court-circuit (25) comportant :
- une source de courant de substitution (26) ;
- un organe d'inversion (27) comportant une première borne d'entrée (32) reliée ou reliable à ladite première borne (12 ; 14), une deuxième borne d'entrée (33) reliée à ladite source de courant de substitution (26), et une borne de sortie (34) reliée à cette deuxième borne (16A-16H) sans être reliée à une autre deuxième borne (16A-16H), ledit organe d'inversion (27) admettant une première position où il relie la borne de sortie (34) à la première borne d'entrée (32) tandis qu'il isole l'une de l'autre la borne de sortie (34) et la deuxième borne d'entrée (33), et admettant une deuxième position où il relie l'une à l'autre la borne de sortie (34) et la deuxième borne d'entrée (33) tandis qu'il isole l'une de l'autre la borne de sortie (34) et la première borne d'entrée (32) ; et
- des moyens de pilotage (28-31) dudit organe d'inversion (27) pour lui faire prendre normalement ladite première position et pour lui faire prendre ladite deuxième position en cas de court-circuit entre les deux points de cette deuxième borne (16A-16H).

2. Système selon la revendication 1, **caractérisé en ce que** lesdits moyens de pilotage (28-31) sont adaptés à détecter si une première condition prédéterminée de courant et/ou de tension représentative d'une situation d'absence de court-circuit entre les deux points de la deuxième borne (16A-16H) concernée est satisfaite ou non, adaptés à détecter si une deuxième condition prédéterminée de courant et/ou de tension représentative d'une situation de court-circuit entre les deux points de cette deuxième borne (16A-16H) est satisfaite ou non, ladite deuxième condition étant distincte de l'inverse de ladite première condition, et adaptés à faire prendre audit organe d'inversion (27) ladite première position lorsque ladite première condition est satisfaite, à faire prendre audit organe d'inversion (27) ladite deuxième position lorsque ladite deuxième condition est satisfaite et sinon à faire rester ledit organe d'inversion (27) dans ladite première position ou dans ladite deuxième position.

3. Système selon la revendication 2, **caractérisé en ce que** ladite première condition est l'absence d'une consommation de courant à la deuxième borne (16A-16H) concernée et ladite deuxième condition est la conjonction de la présence d'une consommation de courant et de la présence d'une sous-tension à la deuxième borne (16A-16H) concernée.

4. Système selon la revendication 3, **caractérisé en ce que** lesdits moyens de pilotage (28-31) comportent un organe (28) de détection de sous-tension pour déterminer si la tension à la deuxième borne (16A-16H) concernée est inférieure ou non à un seuil prédéterminé, un organe (29) de détection de consommation de courant pour déterminer si le courant à la deuxième borne (16A-16H) concernée est supérieur ou non à un seuil prédéterminé, un organe logique (30) relié audit organe (28) de détection de sous-tension et audit organe (29) de détection de consommation de courant, et un organe (31) de commande dudit organe d'inversion (27), ledit organe logique (30) étant adapté à piloter ledit organe de commande (31) pour faire prendre audit organe d'inversion (27) ladite première position si ledit organe (29) de détection de consommation de courant ne détermine pas qu'une intensité supérieure audit seuil de courant prédéterminé est consommée à la deuxième borne (16A-16H) concernée, pour faire prendre audit organe d'inversion (27) ladite deuxième position lorsque ledit organe (28) de détection de sous-tension détermine que la tension à la deuxième borne (16A-16H) concernée est inférieure audit seuil de tension prédéterminé et que ledit organe (29) de détection de consommation de courant détermine en même temps que l'intensité consommée à ladite deuxième borne (16A-16H) concernée est supérieure audit seuil de courant prédéterminé et pour faire rester ledit organe d'inversion dans ladite première position ou dans ladite deuxième position lorsque ledit organe (28) de détection de sous-tension détermine que la tension à ladite deuxième borne (16A-16H) concernée est supérieure audit seuil de tension prédéterminé et que ledit organe (29) de détection de consommation de courant détermine que l'intensité à ladite deuxième borne (16A-16H) concernée est supérieure audit seuil de courant prédéterminé.

5. Système selon la revendication 4, **caractérisé en ce que** ledit seuil d'intensité prédéterminé est compris entre 0,1 et 1,5 milliampères.

6. Système selon l'une quelconque des revendications 4 ou 5, **caractérisé en ce que** ledit seuil de tension prédéterminé est compris entre 2 et 10 volts.

7. Système selon l'une quelconque des revendications 1 à 6, **caractérisé en ce que** lesdits moyens de pilotage comportent un organe (28) de détection de sous-tension comportant un comparateur (61) pour déterminer si la tension à ladite deuxième borne (16A-16H) concernée est inférieure ou non à un seuil de tension prédéterminé.

8. Système selon la revendication 7, **caractérisé en ce que** ledit organe (28) de détection de sous-tension comporte un pont (50) de diodes à redressement double alternance dont les points de raccordement d'entrée (51, 52) sont reliés à des points de raccordement d'entrée (36, 37) dudit organe (28) de détection de sous-tension.

9. Système selon l'une quelconque des revendications 1 à 8, **caractérisé en ce que** lesdits moyens de pilotage (28-31) comportent un organe (28) de détection de sous-tension disposé en parallèle, par des points de raccordement d'entrée (36, 37), de ladite première borne d'entrée (32) dudit organe d'inversion (27).

10. Système selon l'une quelconque des revendications 1 à 9, **caractérisé en ce que** lesdits moyens de pilotage (28-31) comportent un organe (29) de détection de consommation de courant comportant un optocoupleur (47) pour détecter si l'intensité à ladite deuxième borne (16A-16H) concernée est supérieure ou non à un seuil prédéterminé.

11. Système selon la revendication 10, **caractérisé en ce que** ledit optocoupleur (47) est muni d'un ensemble (48) de deux photodiodes disposées tête-bêche.

12. Système selon l'une quelconque des revendications 1 à 11, **caractérisé en ce que** lesdits moyens de pilotage (28-31) comportent un organe (29) de détection de consommation de courant disposé, par deux points de raccordement d'entrée (39, 40), en série entre l'un des points de raccordement de ladite borne de sortie (34) de l'organe d'inversion (27) et l'un des points de raccordement de la deuxième borne (16A-16H) concernée.

13. Système selon l'une quelconque des revendications 1 à 12, **caractérisé en ce que** lesdits moyens de pilotage (28-31) comportent un organe logique (30) présentant une bascule (75).

14. Système selon l'une quelconque des revendications 1 à 13, **caractérisé en ce que** lesdits moyens de pilotage (28-31) comportent un organe de commande (31) présentant un solénoïde (80) et une source de courant continu présentant un pôle de masse (55) et un pôle positif (56) avec chaque point de raccordement (81, 82) dudit solénoïde qui est relié à chaque pôle (55, 56) de ladite source de courant continu par l'intermédiaire d'un transistor (84, 86, 88, 90) dont une électrode de commande est reliée à un point de raccordement (45) dudit organe de commande (31) par l'intermédiaire d'une résistance de polarisation (91, 92) ou par l'intermédiaire d'un inverseur de signal logique (95) et par l'intermédiaire d'une résistance de polarisation (93, 94), de sorte que quand ledit point de raccordement (45) est au même potentiel que ledit pôle de masse (55), un premier (84) desdits transistors, disposé entre ledit pôle positif (56) et un premier point de raccordement (81) dudit solénoïde (80), est passant tandis qu'un deuxième (90) desdits transistors, disposé entre un deuxième (82) desdits points de raccordement du solénoïde (80) et ledit pôle de masse (55), est passant alors que les deux autres transistors (86, 88) sont bloqués, et de sorte que quand ledit point de raccordement (45) de l'organe de commande (31) est au même potentiel que ledit pôle positif (56), un troisième (88) desdits transistors, situé entre ledit pôle positif (56) et ledit deuxième point de raccordement (82) dudit solénoïde (80), est passant tandis que le quatrième transistor (86), disposé entre le premier point de raccordement (81) dudit solénoïde (80) et ledit pôle de masse (55), est passant alors que le premier transistor (84) et le deuxième transistor (90) sont bloqués.

15. Système selon l'une quelconque des revendications 1 à 14, **caractérisé en ce que** ladite source de courant auxiliaire (26) présente deux pôles d'alimentation et une résistance (35) de limitation de courant disposée entre l'un desdits pôles d'alimentation et l'un des points de raccordement de ladite deuxième borne d'entrée (33).

16. Système selon l'une quelconque des revendications 1 à 15, **caractérisé en ce qu'**il comporte deux dites premières bornes de connexion (12, 14) et **en ce qu'**il comporte pour chaque dite deuxième borne (16A-16H) un organe d'inversion (19) présentant une première borne d'entrée (22) reliée à l'une desdites premières bornes (12), une deuxième borne d'entrée (23) reliée à l'autre desdites premières bornes (14) et une borne de sortie (24) reliée à ladite deuxième borne (16A-16H) concernée par l'intermédiaire dudit gestionnaire de court-circuit (25), avec ledit organe d'inversion (19) qui admet une première position où il relie la borne de sortie (24) à la première borne d'entrée (22) tandis qu'il isole l'une de l'autre la borne de sortie (24) et la deuxième borne d'entrée (23), et qui admet une deuxième position où il relie l'une à l'autre la borne de sortie (24) et la deuxième borne d'entrée (23) tandis qu'il isole l'une de l'autre la borne de sortie (24) et la première borne d'entrée (22).

## Claims

1. Telephony distribution system comprising at least one first terminal (12; 14) with two connection points for a pair of conductors (13; 15) providing a telephone line and a plurality of second terminals with two connection points (16A-16H) for a pair of conductors (17A-17H) forming part of a telephony distribution installation, with each connection point of each of said second terminals (16A-16H) connected or connectable to a respective connection point of said first terminal (12; 14), which system is **characterized in that** it comprises, for each of said second terminals (16A-16H), a short-circuit manager (25) including:
- a substitution current source (26);
- a switch (27) having a first input terminal (32) connected or connectable to said first terminal (12; 14), a second input terminal (33) connected to said substitution current source (26), and an output terminal (34) connected to this second terminal (16A-16H) without being connected to another second terminal (16A-16H), said switch (27) assuming a first position in which it connects the output terminal (34) to the first input terminal (32) and isolates the output terminal (34) and the second input terminal (33) from each other and a second position in which it connects the output terminal (34) and the second input terminal (33) to each other and isolates the output terminal (34) and the first input terminal (32) from each other; and
- control means (28-31) for controlling said switch (27) to cause it normally to assume said first position and to cause it to assume said second position in the event of a short-circuit between the two connection points of this second terminal (16A-16H).

2. System according to claim 1, **characterized in that** said control means (28-31) are adapted to detect if a first predetermined current and/or voltage condition representative of an absence of a short-circuit between the two connection points of the second terminal (16A-16H) concerned is satisfied or not, adapted to detect if a second predetermined current and/or voltage condition representative of a short-circuit between the two connection points of that second terminal (16A-16H) is satisfied or not, said second condition being other than the opposite of said first condition, and adapted to cause said switch (27) to assume said first position if said first condition is satisfied, to cause said switch (27) to assume said second position if said second condition is satisfied, and otherwise to cause said switch (27) to remain in said first position or in said second position.

3. System according to claim 2, **characterized in that** said first condition is the absence of current consumption at the second terminal (16A-16H) concerned and said second condition is the combined presence of consumption of current and presence of an undervoltage at the second terminal (16A-16H) concerned.

4. System according to claim 3, **characterized in that** said control means (28-31) include an undervoltage detector (28) for determining if the voltage at the second terminal (16A-16H) concerned is below a predetermined threshold or not, a unit (29) for detecting consumption of current to determine if the current at the second terminal (16A-16H) concerned is above a predetermined threshold or not, a logic unit (30) connected to said undervoltage detector (28) and to said current consumption detector circuit (29), and a control unit (31) of said switch (27), said logic unit (30) being adapted to cause said control unit (31) to cause said switch (27) to assume said first position if said current consumption detector (29) does not detect a current consumption higher than said predetermined current threshold at the second terminal (16A-16H) concerned, to cause said switch (27) to assume said second position if said undervoltage detector (28) determines that the voltage at the second terminal (16A-16H) concerned is below said predetermined threshold and that said current consumption detector (29) determines at the same time that the current consumption at said second terminal (16A-16H) concerned is above said predetermined current threshold and to cause said switch to remain in said first position or in said second position if said undervoltage detector (28) determines that the voltage at said second terminal (16A-16H) concerned is above said predetermined voltage threshold and that said current consumption detector (29) determines that the current at said second terminal (16A-16H) concerned is above said predetermined current threshold.

5. System according to claim 4, **characterized in that** said predetermined current threshold is from 0.1 to 1.5 mA.

6. System according to either claim 4 or claim 5, **characterized in that** said predetermined voltage threshold is from 2 to 10 V.

7. System according to any one of claims 1 to 6, **characterized in that** said control means include an undervoltage detector (28) including a comparator (61) for determining if the voltage at said second terminal (16A-16H) concerned is below a predetermined voltage threshold or not.

8. System according to claim 7, **characterized in that** said undervoltage detector (28) includes a full-wave rectifier diode bridge (50) whose input connection points (51, 52) are connected to input connection points (36, 37) of said undervoltage detector (28).

9. System according to any one of claims 1 to 8, **characterized in that** said control means (28-31) include an undervoltage detector (28) whose input connection points (36, 37) are connected in parallel with said first input terminal (32) of said switch (27).

10. System according to any one of claims 1 to 9, **characterized in that** said control means (28-31) include a current consumption detector including an optocoupler (47) for detecting if the current at said second terminal (16A-16H) concerned is above a predetermined threshold or not.

11. System according to claim 10, **characterized in that** said optocoupler (47) is provided with a set (48) of two photodiodes disposed in antiparallel.

12. System according to any one of claims 1 to 11, **characterized in that** said control means (28-31) include a current consumption detector (29) two input connection points (39, 40) of which are disposed in series between one of the connection points of said output terminal (34) of the switch (27) and one of the connection points of the second terminal (16A-16H) concerned.

13. System according to any one of claims 1 to 12, **characterized in that** said control means (28-31) include a logic unit (30) including a bistable (75).

14. System according to any one of claims 1 to 13, **characterized in that** said control means (28-31) include a control unit (31) including a solenoid (80) and a direct current source having a ground pole (55) and a positive pole (56) with each connection point (81, 82) of said solenoid connected to each pole (55, 56) of said direct current source via a transistor (84, 86, 88, 90) whereof a control electrode is connected to a connection point (45) of said control unit (31) via a bias resistor (91, 92) or via a logic signal inverter (95) and via a bias resistor (93, 94), so that when said connection point (45) is at the same potential as said ground pole (55), a first (84) of said transistors, disposed between said positive pole (56) and a first connection point (81) of said solenoid (80), is turned on whereas a second (90) of said transistors, disposed between a second (82) of said connection points of the solenoid (80) and said ground pole (55), is turned on and the other two transistors (86, 88) are turned off, and so that when said connection point (45) of the control unit (31) is at the same potential as said positive pole (56), a third (88) of said transistors, situated between said positive pole (56) and said second connection point (82) of said solenoid (80), is turned on and the fourth transistor (86), disposed between the first connection point (81) of said solenoid (80) and said ground pole (55), is turned on and the first transistor (84) and the second transistor (90) are turned off.

15. System according to any one of claims 1 to 14, **characterized in that** said auxiliary current source (26) has two power supply poles and a current limiter resistor (35) disposed between one of said power supply poles and one of the connection points of said second input terminal (33).

16. System according to any one of claims 1 to 15, **characterized in that** it includes two of said first terminals (12, 14) and, for each of said second terminals (16A-16H), a switch (19) having a first input terminal (22) connected to one of said first terminals (12), a second input terminal (23) connected to the other of said first terminals (14) and an output terminal (24) connected to said second terminal (16A-16H) concerned via said short-circuit manager (25), wherein said switch (19) assumes a first position in which it connects the output terminal (24) to the first input terminal (22) and it isolates the output terminal (24) and the second input terminal (23) from each other and assumes a second position in which it connects the output terminal (24) and the second input terminal (23) to each other and it isolates the output terminal (24) and the first input terminal (22) from each other.

## Patentansprüche

1. Telefonverteilungssystem mit wenigstens einer ersten Anschlussklemme (12; 14) mit zwei Anschlusspunkten für ein Adernpaar (13; 15), das eine Telefonleitung bereitstellt, und mehreren zweiten Anschlussklemmen mit jeweils zwei Anschlusspunkten (16A-16H), jeweils einer pro Adernpaar (17A-17H), das zu einer Telefonverteilungsanlage gehört, wobei jeder Anschlusspunkt jeder dieser zweiten Anschlussklemmen (16A-16H) mit einem jeweiligen Anschlusspunkt der ersten Anschlussklemmen (12; 14) verbunden oder verbindbar ist,
**dadurch gekennzeichnet, dass** es für jede dieser zweiten Anschlussklemmen (16A-16H) ein Kurzschluss-Steuerungsprogramm (25) aufweist, mit:
- einer Zusatzstromquelle (26);
- einer Umschalteinrichtung (27) mit einer ersten Eingangsklemme (32), die mit der ersten Anschlussklemme (12; 14) verbunden oder verbindbar ist, einer zweiten Eingangsklemme (33), die mit der Zusatzstromquelle (26) verbunden ist, und einer Ausgangsklemme (34), die mit der zweiten Anschlussklemme (16A-16H) verbunden ist, ohne mit einer anderen zweiten Anschlussklemme (16A-16H) verbunden zu sein, wobei die Umschalteinrichtung (27) eine erste Position zulässt, in der sie die Ausgangsklemme (34) mit der ersten Eingangsklemme(32) verbindet, während sie die Ausgangsklemme (34) und die zweite Eingangsklemme (33) voneinander trennt, und eine zweite Position zulässt, in der sie die Ausgangsklemme (34) und die zweite Eingangsklemme(33) miteinander verbindet, während sie die Ausgangsklemme (34) und die erste Eingangsklemme (32) voneinander trennt; und
- Mitteln (28-31) zum Steuern der Umschalteinrichtung (27), damit diese normalerweise die erste Position einnimmt und damit diese im Falle eines Kurzschlusses zwischen den beiden Anschlusspunkten der zweiten Anschlussklemme (16A-16H) die zweite Position einnimmt.

2. System nach Anspruch 1,
**dadurch gekennzeichnet, dass** die Steuermittel (28-31) in der Lage sind zu erkennen, ob ein erster vorbestimmter Strom- und/oder Spannungszustand, der für eine nicht vorhandenen Kurzschluss-Situation zwischen den beiden Anschlusspunkten der betreffenden zweiten Anschlussklemme (16A-16H) repräsentativ ist, erfüllt ist oder nicht, dass diese in der Lage sind zu erkennen, ob ein zweiter vorbestimmter Strom- und/oder Spannungszustand, der für eine Kurzschluss-Situation zwischen den beiden Anschlusspunkten der zweiten Anschlussklemme (16A-16H) repräsentativ ist, erfüllt ist oder nicht, wobei sich der zweite Zustand vom Gegenteil des ersten Zustands unterscheidet, und dass diese in der Lage sind, die Umschalteinrichtung (27) die erste Position einnehmen zu lassen, wenn der erste Zustand erfüllt ist, die Umschalteinrichtung (27) die zweite Position einnehmen zu lassen, wenn der zweite Zustand erfüllt ist, und ansonsten die Umschalteinrichtung (27) in der ersten Position oder in der zweiten Position zu belassen.

3. System nach Anspruch 2,
**dadurch gekennzeichnet, dass** der erste Zustand einem nicht vorhandenen Stromverbrauch an der betreffenden zweiten Anschlussklemme (16A-16H) und der zweite Zustand dem gemeinsamen Auftreten eines vorhandenen Stromverbrauchs und einer vorhandenen Unterspannung an der betreffenden zweiten Anschlussklemme (16A-16H) entspricht.

4. System nach Anspruch 3,
**dadurch gekennzeichnet, dass** die Steuermittel (28-31) eine Einrichtung (28) zum Erkennen einer Unterspannung umfassen, um festzustellen, ob die Spannung an der betreffenden zweiten Anschlussklemme (16A-16H) niedriger als ein vorbestimmter Schwellenwert ist oder nicht, sowie eine Einrichtung (29) zum Erkennen eines Stromverbrauchs, um festzustellen, ob der Strom an der betreffenden zweiten Anschlussklemme (16A-16H) höher als ein vorbestimmter Schwellenwert ist oder nicht, ein Schaltglied (30), das mit der Einrichtung (28) zum Erkennen der Unterspannung und mit der Einrichtung (29) zum Erkennen des Stromverbrauchs verbunden ist, und eine Einrichtung (31) zum Betätigen der Umschalteinrichtung (27), wobei das Schaltglied (30) die Betätigungseinrichtung (31) zu steuern vermag, um die Umschalteinrichtung (27) die erste Position einnehmen zu lassen, wenn die Einrichtung (29) zum Erkennen des Stromverbrauchs nicht feststellt, dass an der betreffenden zweiten Anschlussklemme (16A-16H) eine Stromstärke verbraucht wird, die höher als der vorbestimmte Stromschwellenwert ist, um die Umschalteinrichtung (27) die zweite Position einnehmen zu lassen, wenn die Einrichtung (28) zum Erkennen der Unterspannung feststellt, dass die Spannung an der betreffen zweiten Anschlussklemme (16A-16H) niedriger als der vorbestimmte Spannungsschwellenwert ist, und die Einrichtung (29) zum Erkennen des Stromverbrauchs gleichzeitig feststellt, dass die an der betreffenden zweiten Anschlussklemme (16A-16H) verbrauchte Stromstärke höher als der vorbestimmte Stromschwellenwert ist, und um die Umschalteinrichtung in der ersten Position oder in der zweiten Position zu belassen, wenn die Einrichtung (28) zum Erkennen der Unterspannung feststellt, dass die Spannung an der betreffenden zweiten Anschlussklemme (16A-16H) höher als der vorbestimmte Spannungsschwellenwert ist, und wenn die Einrichtung (29) zum Erkennen des Stromverbrauchs feststellt, dass die Stromstärke an der betreffenden zweiten Anschlussklemme (16A-16H) höher als der vorbestimmte Strom schwellenwert ist.

5. System nach Anspruch 4,
**dadurch gekennzeichnet, dass** der vorbestimmte Schwellenwert der Stromstärke zwischen 0,1 und 1,5 Milliampere liegt.

6. System nach einem der Ansprüche 4 oder 5,
**dadurch gekennzeichnet, dass** der vorbestimmte Schwellenwert der Spannung zwischen 2 und 10 Volt liegt.

7. System nach einem der Ansprüche 1 bis 6,
**dadurch gekennzeichnet, dass** die Steuermittel eine Einrichtung (28) zum Erkennen der Unterspannung umfassen, die einen Komparator (61) aufweist, um zu festzustellen, ob die Spannung an der betreffenden zweiten Anschlussklemme (16A-16H) niedriger als ein vorbestimmter Spannungsschwellenwert ist oder nicht.

8. System nach einem Anspruch 7,
**dadurch gekennzeichnet, dass** die Einrichtung (28) zum Erkennen der Unterspannung eine Brücke (50) mit Ganzwellengleichrichterdioden umfasst, deren Eingangsanschlusspunkte (51, 52) mit Eingangsanschlusspunkten (36, 37) der Einrichtung (28) zum Erkennen der Unterspannung verbunden sind.

9. System nach einem der Ansprüche 1 bis 8,
**dadurch gekennzeichnet, dass** die Steuermittel (28-31) eine Einrichtung (28) zum Erkennen der Unterspannung umfassen, die durch Eingangsanschlusspunkte (36, 37) zu der ersten Eingangsklemme (32) der Umschalteinrichtung (27) parallel angeordnet ist.

10. System nach einem der Ansprüche 1 bis 9,
**dadurch gekennzeichnet, dass** die Steuermittel (28-31) eine Einrichtung (29) zum Erkennen des Stromverbrauchs umfassen, die einen Optokoppler (47) aufweist, um festzustellen, ob die Stromstärke an der betreffenden zweiten Anschlussklemme (16A-16H) höher als ein vorbestimmter Schwellenwert ist.

11. System nach einem Anspruch 10,
**dadurch gekennzeichnet, dass** der Optokoppler (47) mit einem Satz (48) von zwei Photodioden versehen ist, die entgegengesetzt angeordnet sind.

12. System nach einem der Ansprüche 1 bis 11,
**dadurch gekennzeichnet, dass** die Steuermittel (28-31) eine Einrichtung (29) zum Erkennen des Stromverbrauchs umfassen, die durch zwei Eingangsanschlusspunkte (39, 40) zwischen einem der Anschlusspunkte der Ausgangsklemme (34) der Umschalteinrichtung (27) und einem der Anschlusspunkte der betreffenden zweiten Anschlussklemme (16A-16H) in Reihe angeordnet ist.

13. System nach einem der Ansprüche 1 bis 12,
**dadurch gekennzeichnet, dass** die Steuermittel (28-31) ein Schaltglied (30) umfassen, das eine Kippschaltung (75) aufweist.

14. System nach einem der Ansprüche 1 bis 13,
**dadurch gekennzeichnet, dass** die Steuermittel (28-31) eine Betätigungseinrichtung (31) umfassen, die ein Solenoid (80) und eine Gleichstromquelle mit einem Massepol (55) und einem Pluspol (56) an jedem Anschlusspunkt (81, 82) des Solenoids aufweist, das mit jedem Pol (55, 56) der Gleichstromquelle durch einen Transistor (84, 86, 88, 90) verbunden ist, dessen eine Steuerelektrode mit einem Anschlusspunkt (45) der Betätigungseinrichtung (31) durch einen Polarisationswiderstand (91, 92) oder durch einen Logiksignal-Inverter (95) und durch einen Polarisationswiderstand (93, 94) verbunden ist, so dass, wenn der Anschlusspunkt (45) das gleiche Potenzial wie der Massepol (55) hat, ein zwischen dem Pluspol (56) und einem ersten Anschlusspunkt (81) des Solenoids (80) angeordneter erster (84) Transistor durchlassend ist, während ein zwischen einem zweiten (82) Anschlusspunkt des Solenoids (80) und dem Massepol (55) angeordneter zweiter (90) Transistor durchlassend ist, wohingegen die beiden anderen Transistoren (86, 88) gesperrt sind, und so dass, wenn der Anschlusspunkt (45) der Steuereinrichtung (31) das gleiche Potenzial wie der Pluspol (56) hat, ein zwischen dem Pluspol (56) und dem zweiten Anschlusspunkt (82) des Solenoids (80) angeordneter dritter (88) Transistor durchlassend ist, während der zwischen dem ersten Anschlusspunkt (81) des Solenoids (80) und dem Massepol (55) angeordnete vierte Transistor (86) durchlassend ist, wohingegen der erste Transistor (84) und der zweite Transistor (90) gesperrt sind.

15. System nach einem der Ansprüche 1 bis 14,
**dadurch gekennzeichnet, dass** die Zusatzstromquelle (26) zwei Einspeisepole und einen Widerstand (35) zur Strombegrenzung aufweist, der zwischen einem der Einspeisepole und einem der Anschlusspunkte der zweiten Eingangsklemme (33) angeordnet ist.

16. System nach einem der Ansprüche 1 bis 15,
**dadurch gekennzeichnet, dass** es zwei erste Anschlussklemmen (12, 14) umfasst und dass es für jede zweite Anschlussklemme (16A-16H) eine Umschalteinrichtung (19) umfasst, die eine erste, mit einer der ersten Anschlussklemmen (12) verbundene Eingangsklemme (22), eine zweite, mit der anderen der ersten Anschlussklemmen (14) verbundene Eingangsklemme (23) und eine durch das Kurzschluss-Steuerungsprogramm (25) mit der betreffenden zweiten Anschlussklemme (16A-16H) verbundene Ausgangsklemme (24) aufweist, wobei die Umschalteinrichtung (19) eine erste Position zulässt, in der sie die Ausgangsklemme (24) mit der ersten Eingangsklemme (22) verbindet, während sie die Ausgangsklemme (24) und die zweite Eingangsklemme (23) voneinander trennt, und eine zweite Position zulässt, in der sie die Ausgangsklemme (24) und die zweite Eingangsklemme(23) miteinander verbindet, während sie die Ausgangsklemme (24) und die erste Eingangsklemme (22) voneinander trennt.
